(19) Europäisches Patentamt
European Patent Office
Office européen des brevets

(11) **EP 3 976 990 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **20730571.5**

(22) Anmeldetag: **25.05.2020**

(51) Internationale Patentklassifikation (IPC):
**F03D 13/20** (2016.01)      **F16F 7/104** (2006.01)

(52) Gemeinsame Patentklassifikation (CPC):
**F16F 7/104; F03D 13/20;** F05B 2260/964; Y02E 10/72

(86) Internationale Anmeldenummer:
**PCT/EP2020/000102**

(87) Internationale Veröffentlichungsnummer:
**WO 2020/239248 (03.12.2020 Gazette 2020/49)**

(54) **IMPULSDÄMPFER FÜR HOHE SCHLANKE BAUWERKE UND ANLAGEN**

IMPULSE DAMPER FOR TALL, NARROW STRUCTURES AND INSTALLATIONS

AMORTISSEUR D'IMPULSION POUR CONSTRUCTIONS ET INSTALLATIONS MINCES ET HAUTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2019   EP 19000263**

(43) Veröffentlichungstag der Anmeldung:
**06.04.2022   Patentblatt 2022/14**

(73) Patentinhaber: **ESM Energie- und Schwingungstechnik Mitsch GmbH 64646 Heppenheim (DE)**

(72) Erfinder: **DÖRSAM, Mathias 69488 Birkenau (DE)**

(74) Vertreter: **Benz, Jürgen Heumann Rechts- und Patentanwälte Spessartring 63 64287 Darmstadt (DE)**

(56) Entgegenhaltungen:
EP-A1- 0 069 787      EP-A1- 2 746 483
KR-A- 20130 048 636      US-A1- 2010 263 167
US-B2- 9 657 717

## Beschreibung

Die Erfindung betrifft einen neuartigen Impulsdämpfer zur Reduzierung von insbesondere extremen Schwingungsereignissen in hohen schlanken Bauwerken, insbesondere Windkraftanlagen. Der erfindungsgemäße Impulsdämpfer arbeitet dabei nach dem Prinzip der Anschlagdämpfung und ist insbesondere zur Dämpfung der zweiten Eigenfrequenz der Anlage, vorzugsweise des Turms einer Windkraftanlage geeignet. Der erfindungsgemäße Impulsdämpfer zeichnet sich vor allem dadurch aus, dass er sowohl dämpferseitig als auch anlagenseitig mit dämpfenden vorzugsweise elastischen Anschlagdämpfungselementen ausgestattet ist.

Anschlag-, bzw. Impulsdämpfer sind im Stand der Technik prinzipiell bekannt. Bei Schwingungen durch das Hauptsystem, beispielsweise eine Windkraftanlage, schlägt die für die Dämpfung vorgesehenen Masse an eine Wandung der Anlage. Dabei tritt ein Impuls auf, der in seiner Richtung der Bewegungsrichtung der Anlage entgegengesetzt ist. Dadurch wird das Hauptsystem fortschreitend beruhigt.

Eine Windkraftanlage mit einem Impulsdämpfer zur Dämpfung der ersten Turmeigenfrequenz wird beispielsweise in dem Patent US 9,657,717 B2 beschrieben. Der Impulsdämpfer ist dabei in der obere Struktur des Turm untergebracht und umfasst ein eigenständiges Dämpfergehäuse, welches an eben dieser oberen Struktur befestigt ist. Das Dämpfergehäuse ist zylindrisch und mit einem flachen Boden versehen. Innerhalb des Dämpfergehäuses befindet sich eine scheibenförmige Dämpfermasse, die räumlich kleiner ist als das umgebende Gehäuse und auf dem Boden des Gehäuses über Rollen bewegbar ist. Die Dämpfungsscheiben stoßen bei Bewegung des Systems über Dämpfungselemente an der Innenseite des Dämpfungsgehäuse an und reduzieren so die Erregerschwingung. Das beschriebene Dämpfersystem ist, wie bereits erwähnt, vor allem gegen Schwingungen der 1. Turmeigenfrequenz, welche im obersten Viertel bis Fünftel des Turmes oder des schlanken Bauwerks auftreten, konzipiert worden.

Schwingungen der 2. Turmeigenfrequenz treten jedoch mittig bzw. bei der halben bis zwei Drittel der Turmhöhe auf. Die im US-Patent vorgeschlagenen Lösung wäre somit für diesen Einsatz weniger geeignet bzw. wenig effektiv.

Der hier vorgestellte Impulsdämpfer ist aufgrund seines Konstruktions-Designs bestens geeignet für die Dämpfung der 2. Eigenfrequenz von Türmen, insbesondere Türme von Windkraftanlagen, oder anderen hohen schlanken Bauwerken bzw. Anlagen. Dabei kann der erfindungsgemäße Impulsdämpfer vorzugsweise dann zum Einsatz kommen, bzw. wirksam werden, wenn die Anlagen von besonderen Schwingungsereignissen betroffen sind, welche nach Abschalten im Ruhebetrieb auftreten können.

Gegenstand der Erfindung ist somit ein Impulsdämpfer (10) zur Reduzierung von Schwingungen insbesondere der zweiten Eigenfrequenz von Türmen oder hohen schlanken Bauwerken/Anlagen, vorzugsweise Windkraftanlagen, im Wesentlichen umfassend:

(a) ein horizontal bewegliche Dämpfermasse (6),
(b) eine horizontal ausgerichtete Trägerstruktur (4), auf welcher die Dämpfermasse beweglich lagert, wobei die Trägerstrukturwelche mit dem Turm oder dem hohen schlanken Bauwerk der Anlage fest verbunden ist, so dass die durch die einwirkenden Schwingungskräfte erzeugten Bewegungen der Anlage auf die auf der Trägerstruktur bewegbaren Dämpfermasse übertragen werden können, wodurch beim Anschlagen der bewegten Dämpfermasse an Elemente der Trägerstruktur oder der Anlage ein Impuls entgegen der Bewegungsrichtung der Anlage erzeugt und die auftretenden Schwingung gedämpft wird, und
(c) zusätzliche Dämpfungselemente, die bei Kontakt der Dämpfermasse mit der Trägerstruktur oder Anlage wirksam werden,

wobei (i) die Dämpfermasse (6) auf der horizontal ausgerichteten Trägerstruktur (4) über Lagerelemente (5) auf der Unterseite der Dämpfermasse freibeweglich horizontal verschiebbar ist und ringförmig umgeben ist mit einer an ihrem seitlichen Umfang befestigten ersten rotationssymmetrischen, in horizontaler Richtung wirksamen (dämpferseitigen) Anschlagvorrichtung (3)(7), und
(ii) die Trägerstruktur (4) mit einer zweiten, rotationssymmetrischen, in horizontaler Richtung wirksamen Anschlagvorrichtung (3')(7') fest verbunden ist, welche die erste gegenüberliegende Anschlagvorrichtung (3)(7) und die Dämpfermasse (6) ringförmig mit einem im Ruhezustand definierten Abstand umschließt.

Dabei umfasst die erste (dämpferseitige) Anschlagvorrichtung (3)(7) eine erste feste unflexible/harte horizontal ausgerichtete ringförmige Anschlagscheibe (3), die auf ihren Umfang verteilt, mehrere fest mit ihr verbundene erste Dämpfungselemente (7), beispielsweise Elastomerelemente, oder alternativ ein entsprechendes einziges im Wesentlichen durchgehend umlaufendes Dämpfungselement (7) aufweist.

Die zweite anlagenseitige (turmseitige) Anschlagvorrichtung (3')(7') umfasst eine zweite feste unflexible/harte, horizontal ausgerichtete ringförmige Anschlagscheibe (3'), die auf ihren Umfang verteilt, mehrere fest mit ihr verbundene zweite Dämpfungselemente (7'), beispielsweise Elastomerelemente aufweist, oder alternativ ein entsprechendes einziges im Wesentlichen durchgehend umlaufendes Dämpfungselement (7').

Die beiden Anschlagvorrichtungen (3)(7) und (3')(7') sind hierbei so zueinander angeordnet, dass bei beliebiger horizontaler Bewegung bzw. Auslenkung der Dämpfermasse entlang der Trägerstruktur (4) die an ihr befestigte Anschlagscheibe (3) mit ihrem seitlichen nach außen weisenden Rand an den gegenüberliegenden seitlichen Rand der weiter außen umlaufenden Anschlagscheibe (3') anschlagen kann, wobei im Zeitpunkt des gegenseitigen Anschlagens der Scheiben (3)(3') die Dämpfungselemente (7) und (7') wirksam werden,.

Die Dämpfungselemente (7) der dämpferseitigen ersten Anschlagvorrichtung sind zwischen der vorzugsweise oben liegenden Anschlagscheibe (3) und der Dämpfermasse (6) angeordnet und jeweils mit diesen Bauteilen verbunden. Kommt die dämpferseitige Anschlagscheibe (3) mit der anlagenseitigen Anschlagscheibe (3') auf der Trägerstruktur (4) in Kontakt, so werden die Dämpfungselemente (7), welche mit der Dämpfermasse (6) fest verbunden sind, je nach verwendeten Typ, aktiv, bzw. elastisch verformt.

In analoger Weise sind die Dämpfungselemente (7') der anlagenseitigen zweiten Anschlagvorrichtung zwischen der, vorzugsweise oben liegenden ringförmigen Anschlagscheibe (3') und der Trägerstruktur (4) angeordnet und jeweils mit diesen Bauteilen verbunden. Kommt die anlagenseitige Anschlagscheibe (3') mit der dämpferseitigen Anschlagscheibe (3) an der Dämpfermasse (6) in Kontakt, so werden die Dämpfungselemente (7'), welche mit der Trägerstruktur (4) fest verbunden sind, je nach verwendeten Typ, aktiv, bzw. elastisch verformt. Dadurch entsteht eine Rückstellkraft. Auch dadurch entsteht eine Rückstellkraft.

In einer Ausführungsform der Erfindung sind jeweils mindestens drei, beispielsweise 3, 4, 6, 8, 10, 12, 20, 24, 30, 36 Dämpfungselemente (7) und (7') verteilt auf dem Umfang der jeweiligen Anschlagscheiben (3) und (3'), mit denen sie in Verbindung stehen, angeordnet. Die Dämpfungselemente sind vorzugsweise mit gleichen oder ähnlichen Dämpfungseigenschaften ausgestattet, und ihre Anzahl und Größe richtet sich nach der Größe und den gewünschten Eigenschaften des erfindungsgemäßen Impulsdämpfers. Die Dämpfungselemente (7)(7') sind vorzugsweise gleichmäßig am Umfang der jeweiligen Anschlagscheibe angeordnet, damit in alle Schwingungsrichtungen der Anlage bzw. der Masse (6) eine im Wesentlichen gleiche Steifigkeit und somit auch eine im Wesentlichen gleiche Dämpfung vorliegt, bzw. erreicht wird.

In einer weiteren Ausführungsform der Erfindung weisen die Anschlagscheiben (3) und (3') jeweils nur ein einziges, im Wesentlichen durchgehendes Dämpfungselement (7) (7') auf, so dass damit ebenfalls eine in alle Richtungen gleichmäßige Dämpfung erreicht werden kann.

Die Dämpfungselemente (7) und (7') können erfindungsgemäß von unterschiedlichem Typ sein: so können z.B. Federelemente, hydraulische Elemente, Elastomerelemente oder Reibungselemente eingesetzt werden.

In einer bevorzugten Ausführungsform der Erfindung sind die besagten Dämpfungselemente verformbare, vorzugsweise runde oder konische Elastomerelemente, welche auch als Schichtelemente vorliegen können.

Sind die Dämpfungselemente (7)/7') verformbare Elastomerelemente, so ist zu beachten, dass die Verformung dieser elastischen Elemente durch die Bewegung der Impulsdämpfer-Masse (6) eine signifikante und möglicherweise unerwünschte Wärmeentwicklung zur Folge führt. Aus diesem Grund kann es vorteilhaft sein, eine eher größere als kleinere Anzahl von eher kleineren als größeren einzelnen elastischen Dämpfungselementen einzusetzen, da diese eine größere Gesamtoberfläche besitzen, und somit zu einer besseren Wärmeableitung beitragen.

Wenn diese erzeugte Wärmeenergie vernachlässigt werden oder durch andere technische Maßnahmen abgeführt werden kann, ist es auch möglich, die einzelnen elastischen Dämpfungselemente (7) und (7') durch jeweils ein einziges im Wesentlichen durchgehend umlaufendes elastisches Element zu gestalten, welches in fester Verbindung mit der jeweiligen ringförmigen Anschlagscheibe (3)(3') steht.

Die Trägerstruktur (4) ist im einfachsten Fall eine horizontal zum Turm / Gebäude gelagerten Platte oder weist eine solche auf und ist direkt oder indirekt über Stützen oder Halterungen (2) mit dem Turm oder dem Gebäude fest verbunden.

Die Dämpfungsmasse (6) lastet über die Lagerelemente (5) auf der Trägerstruktur (4). Die Lagerelemente können dabei erfindungsgemäß Gleit-Reiblager / Gleitschichten oder aber auch Elastomer-Schubelemente sein. Bei Überwindung der Reibkräfte des Gleitlagers/der Gleitschicht kann (5) kann die Dämpfungsmasse (6) sich also auf der Trägerstruktur (4) entsprechend der einwirkenden Schwingungskräfte bewegen. Die Reibung der Lager (5) kann dabei so gewählt werden, dass die Dämpfungsmasse (6) sich erst bei einer bestimmten einwirkenden Kraft in Bewegung setzen kann. Im Normalbetrieb der Anlage ist es meist gewünscht, dass keine oder keine nennenswerte Bewegung der Dämpfungsmasse (6) und damit keine Dämpfung initiiert wird. Die die Reib- und Gleitelemente weisen eine Reibungskoeffizienten auf, der entsprechend der Eigenschaften und der Betriebsbedingungen der Anlage so ausgelegt ist, dass eine ausreichende Energiedissipation durch Reibung aus der schwingenden Anlage erfolgen kann. Hierbei muss sichergestellt werden, dass pro Schwingzyklus eine gewisse Energie dissipiert wird. Diese dissipierte Energie setzt sich aus der Reibarbeit am Lager (5) und Dämpfungsarbeit innerhalb der Dämpfungselemente (7)(7') der Anschlagvorrichtungen (3)(7) und (3')(7')zusammen. Wird nun der Reibwert am Lager (5) vergrößert, muss weniger Energie an den Dämpfungselementen (7)(7') dissipiert werden. Hierdurch kann im Falle von elastischen Elementen ein Elastomer mit einer geringeren Dämpfung verwendet werden, was Vorteile bezüglich Überhitzung und dem Steifigkeitsverhalten der (7) über der Temperatur mit sich bringt, da Elastomere mit hoher Dämpfung ihre Eigenschaften über der Temperatur stark verändern.

Neben den besagten Reib- oder Gleitlagern können bei einer anderen Ausführungsform der Erfindung auch Elastomer-Schubfedern zum Einsatz kommen, welche eine reibungsfreie Horizontalbewegung der Dämpfermasse (6) ermöglichen. Bei einer geringen Schubsteifigkeit der Elastomer-Schubfeder wirkt der Anschlagdämpfer bereits bei sehr kleiner äußerer Anregung. Durch die Elastomer-Schubfedern wird eine Rückstellkomponente erzeugt, welche genutzt werden kann, um die Dämpfermasse in ihrer Eigenfrequenz so abzustimmen, dass diese als Tilger mit oder ohne Anschlagfunktion fungiert. Hierdurch kann die Performance des Dämpfers deutlich erhöht werden. In diesem Fall muss jedoch die Eigenfrequenz der Tilgereinheit an die Eigenfrequenz vom Hauptsystem angepasst werden. Mit Anschlagfunktion muss die Schubsteifigkeit der Elastomer-Schubfeder und die Steifigkeit der Feder-Dämpfer-Einheit (7)(7') auf die auftretende Anregung vom Hauptsystem so abgestimmt werden, dass die Masse immer gegenphasig zur Schwingung vom Hauptsystem anschlägt. Diese Konstellation hat den Vorteil einer guten Performance.

Der erfindungsgemäße Anschlag- oder Impulsdämpfer (10) ist dafür vorgesehen, im zentralen oder mittleren Bereich der Bauwerkshöhe installiert zu werden, damit die 2. Eigenfrequenz des Bauwerks beeinflusst werden kann und nicht die 1. Eigenfrequenz, die im oberen Bereich bzw. an der Bauwerksspitze auftritt. Vorzugsweise ist das Bauwerk ein Turm einer Windkraftanlage.

Hierfür wird die Trägerstruktur (4) mit dem eigentlichen Impulsdämpfer mit der Turmwand (1) in der entsprechenden Höhe von 40 - 80%, vorzugsweise 50 - 70%, insbesondere 55 -60% der Turm- bzw. Bauwerkshöhe, fest verbunden. Im Falle einer Windkraftanlage geschieht dies vorzugsweise an einem Turmflansch (2), welcher die verschiedenen Turmsegmente miteinander verbindet.

Die Funktionsweise einer erfindungsgemäßen Dämpfungsanordnung mit einer Reib-/ Gleitlager-Anordnung ist wie folgt:
Im Falle leichter Schwingungen, welche durch Bewegungen der Anlage und im Falle einer Windkraftanlage durch Bewegungen des Turms auftreten, bewegt sich die Dämpfermasse (6) gegenüber der Trägerstruktur (4) nicht, wenn die Reibungskräfte größer als die Schwingungskräfte sind.

An der Dämpfermasse (6) sind auf der Unterseite Reib-Gleitbeläge (5) befestigt. Diese Reib-Gleitbeläge (5) liegen auf der Trägerstruktur (4) auf. Bei kleinen Schwingungen vom Hauptsystem (z. B. Windkraftanlage) kommt es zu keiner Relativbewegung zwischen den Reib-Gleitbelägen (5) und der Trägerstruktur (4).

Werden die Schwingungen vom Hauptsystems größer, resultiert ebenfalls eine größere Beschleunigungskraft auf die Dämpfermasse (6). Ist diese Beschleunigungskraft größer als die Reibkraft zwischen den Reib-Gleitbeläge (5) und der Trägerstruktur (4), kommt es zu einer Relativbewegung zwischen Dämpfermasse (6) und der Trägerstruktur (4).

Dieser Zusammenhang lässt sich mit folgender Gleichung erfassen:

$$XH = \frac{\mu * g}{(2 * \pi * fH)^2}$$

XH →Schwingamplitude Hauptsystem, ab der Relativbewegung zwischen Dämpfermasse (6) und der Grundplatte (4) auftritt (System anfängt zu wirken)

μ →Reibwert (Reibungskoeffizient) zwischen Reib-Gleitbelägen (5) und Trägerstruktur

g →Erdbeschleunigung

fH → Schwingfrequenz Hauptsystem (Resonanzfrequenz Hauptsystem)

Die Bewegungsrichtung der Dämpfermasse (6) ist hierbei entgegen der Bewegung vom Hauptsystem (Schwingt das Hauptsystem nach links, bewegt sich die Dämpfermasse nach rechts und umgekehrt).

Es wird ersichtlich, dass sich mit einem kleineren μ (Gleitbelag) die Dämpfermasse bereits bei einer kleineren Schwingamplitude vom Hauptsystem in Bewegung setzt (früher anfängt zu wirken). Wird μ groß gewählt (Reibbelag) so fängt System erst bei großen Amplituden an zu wirken. Hierüber lässt sich der Dämpfer auf den jeweiligen Anwendungsfall anpassen. Auch können hierdurch Kosten gespart werden, da der Impulsdämpfer bei kleinen Schwingungen der Anlage sich nicht in Bewegung setzt und somit kein Verschleiß erfährt.

Zudem lässt sich über einen größeren Reibwert die Anschlagslast bei Kontakt der Anschlagscheiben (3)(3') reduzieren, da dieser die Dämpfermasse (6) bis zum Anschlag hin abbremst und somit die Energie reduziert, welche von den Dämpfungselementen (7)(7') aufgenommen werden muss. Durch entsprechende Abstimmung und Anpassung des Reibungskoeffizienten mittels Auswahl entsprechender Materialien kann somit bei dem erfindungsgemäßen Impulsdämpfer gezielt die Anschlaglast modifiziert, also auch reduziert werden.

In einem Rechenbeispiel mit einer 5t Dämpfermasse kann durch die Erhöhung des Reibwertes von μ=0,05 (Gleitbelag) auf μ=0,45 (Reibbelag) die Anschlagslast um 20% verringert werden.

Da die Dämpfungselemente erfindungsgemäß sowohl dämpferseitig (7) als auch anlagenseitig (7') miteinander verbunden sind, wird die Anschlagslast auf alle verbundenen Elemente gleichmäßig verteilt im Gegensatz zu den Lösungen des Standes der Technik.

Ist die Schwingamplitude vom Hauptsystem groß genug, schlagen die Anschlagscheiben (3)(3') gegeneinander. Hierdurch wird ein Impuls entgegen der Bewegungsrichtung vom Hauptsystem erzeugt, was deren Schwingung minimiert .

Die Dämpfungselemente (7')(7) sind in ihrer Wirkung so konstruiert, dass in alle horizontalen Richtungen im Wesentlichen das gleiche Verhalten vorliegt. Diese Einheit kann in den folgenden Konstellationen aufgebaut sein:

- nur Federn
- nur Dämpfer
- einzelne Feder und Dämpfer in Parallelschaltung
- einzelne Feder und Dämpfer in Reihenschaltung
- aus einem Elastomer bestehen, welches sich in erster Näherung wie eine Feder-Dämpfer-Anordnung in Parallelschaltung verhält.

Wie bereits erwähnt, sind die Dämpfungselemente (7) erfindungsgemäß vorzugsweise rotationssymmetrisch angeordnet und verbinden masseseitig die Dämpfermasse (6) mit der Anschlagscheibe (3). Die Dämpfungselemente (7') sind ebenfalls rotationssymmetrisch angeordnet und verbinden anlagenseitig die Tragstruktur (4) mit der Anschlagscheibe (3'). Hierdurch wird der Körperschall aus dem Anschlagereignis effektiv in die Dämpfermasse (6) und in den Turm (1) minimiert, was eine deutlich reduzierte Lärmbelastung während Dämpferbetrieb zur Folge hat. Dies stellt bei den aktuell sehr strengen Lärmbeschränkungen für Windkraftanalgen einen deutlichen Vorteil gegenüber dem Stand der Technik dar.

Um die Lärmbelastung weiter zu reduzieren, sind die Dämpfungselemente (7) vorzugsweise weich konstruiert, so dass eine große Verformung während dem Anschlagen resultiert (maximale Verformung im Bereich +/- 150mm; Betriebsverformung im Bereich +/- 40 bis 100mm). Hierdurch wird der erste Peak der Anschlagslast minimiert, was ebenfalls die Lärmbelastung deutlich reduziert. Das Anschlagereignis wird sozusagen abgefedert.

Durch die beidseitigen, weichen Dämpfungselemente der Anschlagvorrichtungen wird zudem die Stoßbelastung sowohl auf die anlagenseitige als auch auf die dämpferseitige Struktur deutlich reduziert, da während des Anschlagens lediglich die ringförmigen unflexiblen Anschlagscheiben (3)(3') abrupt abgebremst werden. Die Belastung auf die dahinterliegenden Bauteile fällt aber geringer aus, da sich die Anschlagelemente verformen und somit die Beschleunigung der restlichen Bauteile reduzieren.

Durch den beschriebenen konstruktiven Aufbau kann im Gegensatz zu vergleichbaren Systemen des Standes der Technik auf eine Dämpfergehäuse verzichtet werden. Da kein Dämpfergehäuse benötigt wird, ergibt sich auch ein Kostenvorteil. Die Wegbegrenzung ist vielmehr in die benötigte Tragstruktur integriert.

Die Form der Dämpfermasse (6) des erfindungsgemäßen Impulsdämpfers kann frei gewählt werden, solange sie rotationssymmetrisch ist. Da die Dämpfermasse nun in ihrer Form frei gewählt werden kann, kann diese nun wesentlich einfacher in den begrenzten Bauraum innerhalb der Windkraftanlage integriert werden. Vorzugsweise wird eine runde Form der Dämpfermasse (6) gewählt.

Bei Verwendung von mehreren separaten Dämpfungselementen (7)(7') wird die Belastung pro Element reduziert. Dies ist ein Vorteil z. B. gegenüber dem in der US 9,657,717 B2 beschriebenen System, bei dem die komplette Anschlagslast von einer einzigen Stelle des Dämpfungselementes abgefangen werden muss. Beim erfindungsgemäßen Impulsdämpfer mit mehreren einzelnen Dämpfungselementen wird hingegen die Anschlagslast über deren Anzahl verteilt. Im Gegensatz hierzu kommt es beispielsweise bei der Lösung der US 9,657,717 B2 nicht zu einer Aufteilung der Anschlagslast über mehrere Elemente, da der Anschlag immer nur an einer Stelle stattfindet und somit ein einzelnes Dämpfungselement am Umfang belastet.

Im Folgenden werden die Abbildungen kurz beschrieben:

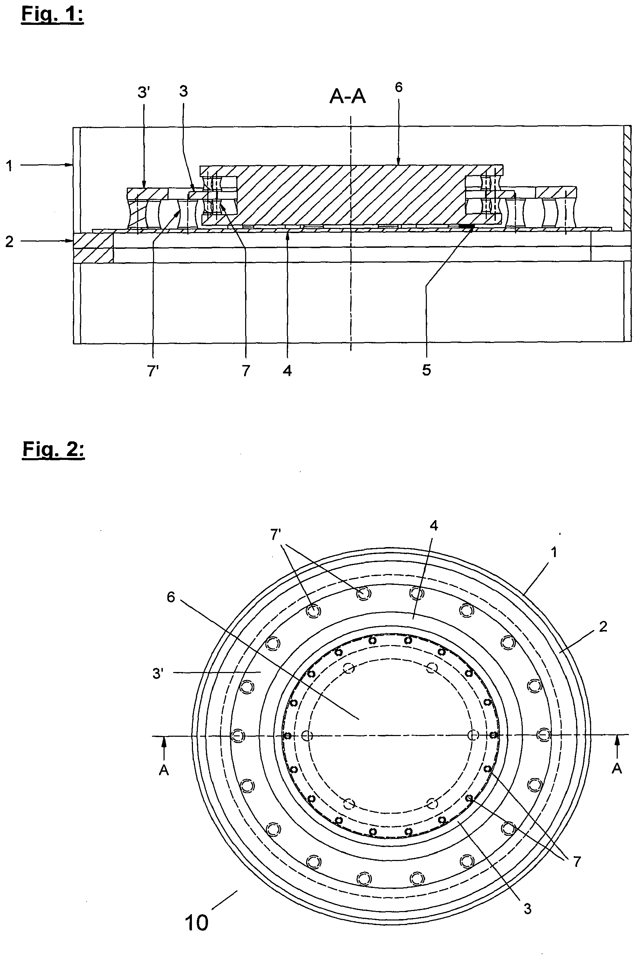

Abb. 1 zeigt schematisch in der Seitenansicht das Design des erfindungsgemäßen Impulsdämpfers (10):
Die runde Dämpfermasse (6) lagert mit Hilfe von in der Regel mehreren Lagerelementen (5) auf einer horizontal ausgerichteten plattenförmigen Trägerstruktur (4), welche über Stützhalterungen (2) mit der Turmwand (1) verbunden sind.

Die Lagerelemente sind in dieser Ausführungsform Reib- bzw. Gleitlager mit einem Reibwert, der den gewünschten Erfordernissen entspricht. Die Dämpfermasse kann sich so entsprechend der Reibungswerte der Lager (5) auf der Platte frei in alle Richtungen bewegen, sofern die die notwendigen Kräfte, erzeugt durch die Bewegung der Anlage, auftreten. Die Masse (6) ist also horizontal frei beweglich.

Die Masse (6) weist an ihrem seitlichen Umfang eine ringförmige rotationssymmetrische erste Anschlagvorrichtung (3)(7) des Impulsdämpfers auf, die im Wesentlichen von elastischen Dämpfungselementen (7) und harten, unelastischen Anschlagelementen (3) gebildet wird. Die Dämpfungselemente (7) werden in dieser Ausführungsform durch eine Vielzahl von Elastomerelementen repräsentiert, die um die Masse herum gleichmäßig verteilt angebracht sind.

Die Anschlagvorrichtung (3)(7) ist durch eine Halterung mit der Masse verbunden.

In der gezeigten Ausführungsform Fall hat die Masse (6) seitlich eine umlaufende Aussparung, welche als Halterung dient. In dieser Aussparung sind vorzugsweise zylindrische oder konische Elastomerelemente (7) mit ihrem nach außen weisenden Ende an den oberen als auch an den unteren Teil der Aussparung fest angebracht. Mit dem jeweils nach innen weisenden Ende sind besagte Elastomerelemente (7) mit der ebenfalls umlaufenden Anschlagscheibe (3) fest verbunden, die damit mittig in der Aussparung bzw. Halterung angeordnet ist. Die Gestaltung kann aber auch von der hier konkret beschriebenen abweichen, solange die Funktionalität gewahrt bleibt.

Die Anschlagscheibe (3) ragt dabei über den Rand der Aussparung hinaus. Anstelle der Aussparung in der Dämpfermasse (6) kann auch eine entsprechend gestaltete umlaufende Halterung für die Anschlagvorrichtung (3)(7) vorgesehen sein.

Im konkreten Fall umfasst die Anschlagvorrichtung (3)(7) zylindrische Elastomerelemente, die vorzugsweise symmetrisch gegenüberliegen und durch die Anschlagscheibe (3), mit der sie fest verbunden sind, voneinander getrennt sind. Die Masse kann sich nun entsprechend der einwirkenden Kräfte horizontal in alle Richtung bewegen, bis die Anschlagscheibe (3) an die gegenüberliegende Anschlagscheibe (3') anstößt.

Der erfindungsgemäße Impulsdämpfer weist weiter eine ringförmige rotationssymmetrische zweite Anschlagvorrichtung (3')(7') auf.. Eine ringförmige Anschlagscheibe (3') ist dabei mit der Trägerstruktur (4) und über die Stützhalterungen (2) mit der zu dämpfenden Anlage, hier die Wandung (1) eines Turmes, verbunden.

Die ringförmige Anschlagscheibe (3') ist horizontal zur Trägerstruktur (4) ausgerichtet und gegenüber der Anschlagscheibe (3) des Massenteils (6) so angeordnet, dass sich die Seitenränder der Scheiben (3') und (3) gegenüberstehen.. Der Anschlagring (3') ist an seiner Unterseite mit vorzugsweise zylindrischen oder konischen Elastomerelementen (7') an deren oberen Ende verbunden, welche vorzugsweise in Anzahl und Anordnung den gegenüberliegenden Elastomerelementen (7) an der Dämpfermasse (6) entsprechen. Die Elastomerelemente (7') sind an ihrem unteren Ende mit der Trägerstruktur (4) fest verbunden. Im Ruhezustand des Impulsdämpfers haben die Scheiben (3')(3) einen definierten Abstand, der sich in seinem Wert nach der Größe des Dämpfers und seinen gewünschten Dämpfungseigenschaften richtet. Bei Krafteinwirkung schlagen die Scheiben (3') und (3) durch die Bewegung der Masse (6) auf der horizontalen Fläche der Trägerplatte (4) an ihren Seitenrändern aneinander. Der Bewegungsraum zwischen den Anschlagelementen (3) und (3') kann entsprechend der gewünschten Bedingungen gewählt werden, beträgt aber im Falle eine Windkraftanlage etwa 5 mm - 200 mm , vorzugsweise 20 mm - 100 mm.

Abb. 2 zeigt die entsprechende Draufsicht des erfindungsgemäßen Impulsdämpfers gemäß Abb. 1.

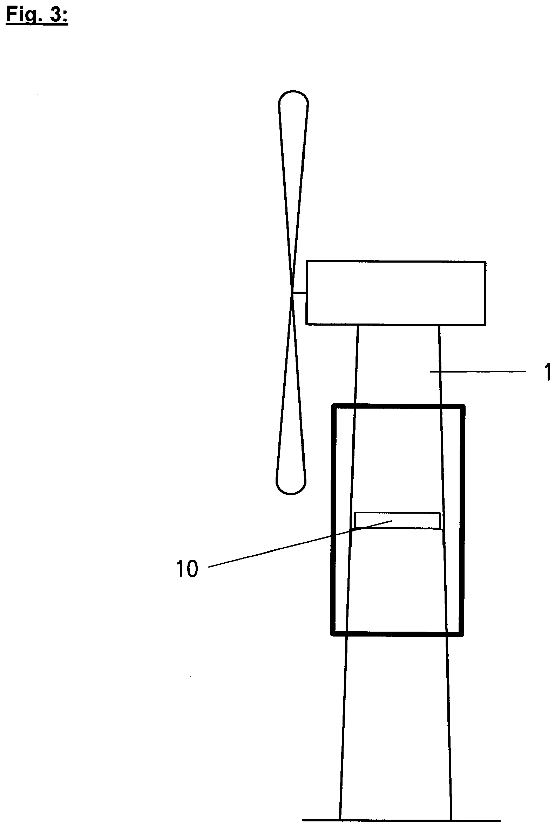

Abb. 3 zeigt schematisch eine Windkraftanlage mit Turm, Gondel und Rotor.

Ebenfalls schematisch ist der erfindungsgemäße Impulsdämpfer (10) eingezeichnet. Der rechteckige Rahmen gibt den Bereich der möglichen Position des erfindungsgemäßen Impulsdampfers in Bezug auf die Turmhöhe an, in dem die 2. Eigenfrequenz der Anlage wirkungsvoll gedämpft werden kann.

**Patentansprüche**

1.  Impulsdämpfer geeignet zur Dämpfung von Schwingungen, die in Anlagen mit Türmen oder in anderen hohen schlanken Bauwerken auftreten, wobei der Impulsdämpfer innerhalb des Turmes oder des hohen schlanken Bauwerks angebracht ist und umfasst:

    (a) ein horizontal bewegliche Dämpfermasse,
    (b) eine horizontal ausgerichtete Trägerstruktur für die Dämpfermasse, welche mit dem Turm oder dem hohen schlanken Bauwerk der Anlage fest verbunden ist, so dass die durch die einwirkenden Schwingungskräfte erzeugten Bewegungen der Anlage auf die auf der Trägerstruktur bewegbaren Dämpfermasse übertragen werden können, wodurch bei Anschlagen der bewegten Dämpfermasse an Elemente der Trägerstruktur oder der Anlage ein Impuls entgegen der Bewegungsrichtung der Anlage erzeugt und die auftretenden Schwingung gedämpft wird, und
    (c) zusätzliche Dämpfungselemente, die bei Kontakt der Dämpfermasse mit der Trägerstruktur oder Anlage wirksam werden, wobei

    (i) die Dämpfermasse (6) auf der horizontal ausgerichteten Trägerstruktur (4) über Lagerelemente (5) auf der Unterseite der Dämpfermasse freibeweglich horizontal verschiebbar ist und ringförmig umgeben ist mit einer an ihrem seitlichen Umfang befestigten ersten rotationssymmetrischen, in horizontaler Richtung wirksamen Anschlagvorrichtung (3)(7), und **dadurch gekennzeichnet, dass**
    (ii) die Trägerstruktur (4) mit einer zweiten, rotationssymmetrischen, in horizontaler Richtung wirksamen Anschlagvorrichtung (3')(7') verbunden ist, welche die erste gegenüberliegende Anschlagvorrichtung (3)(7) und die Dämpfermasse (6) ringförmig mit einem im Ruhezustand definierten Abstand umschließt,

    wobei die erste Anschlagvorrichtung (3)(7) eine erste unflexible, horizontal ausgerichtete ringförmige Anschlagscheibe (3) umfasst, die auf ihren Umfang verteilt, mehrere fest mit ihr verbundene erste einzelne Dämpfungselemente (7) oder ein einziges im Wesentlichen entlang des Umfangs der Anschlagsscheibe (3) durchgehendes ringförmiges erstes Dämpfungselement (7) aufweist, und die zweite Anschlagvorrichtung (3')(7') eine zweite unflexible, horizontal ausgerichtete ringförmige Anschlagscheibe (3') umfasst, die auf ihren Umfang verteilt, mehrere fest mit ihr verbundene zweite einzelne Dämpfungselemente (7') oder ein einziges im Wesentlichen entlang des Umfangs der Anschlagsscheibe (3') durchgehendes ringförmiges zweites Dämpfungselement (7) aufweist,

und die beiden Anschlagvorrichtungen (3)(7) und (3')(7') so zueinander angeordnet sind, dass bei beliebiger horizontaler Bewegung oder Auslenkung der Dämpfermasse (6) entlang der Trägerstruktur (4) die an ihr befestigte Anschlagscheibe (3) mit ihrem seitlichen nach außen weisenden Rand an den gegenüberliegenden seitlichen Rand der umlaufenden Anschlagscheibe (3') anschlagen kann unter gleichzeitiger Verformung oder Aktivierung der mehreren oder einzigen Dämpfungselemente (7) und (7').

2. Impulsdämpfer nach Anspruch 1, **dadurch gekennzeichnet, dass** die Lagerelemente (5) zwischen Dämpfermasse (6) und Trägerstruktur (4) Reib- oder Gleitelemente sind.

3. Impulsdämpfer nach Anspruch 2, **dadurch gekennzeichnet, dass** die Reib- und Gleitelemente (5) eine Reibungskoeffizienten aufweisen, der entsprechend der Eigenschaften und der Betriebsbedingungen der Anlage so ausgelegt ist, dass eine ausreichende Energiedissipation durch Reibung aus der schwingenden Anlage erfolgt.

4. Impulsdämpfer nach Anspruch 3, **dadurch gekennzeichnet, dass** der Reibungskoeffizient der Geleitelemente (5) so gewählt ist, dass sich die Dämpfermasse (6) erst bei größeren Schwingamplituden in Bewegung setzt, im Normalbetrieb jedoch still steht.

5. Impulsdämpfer nach Anspruch 1, **dadurch gekennzeichnet, dass** die Lagerelemente (5) zwischen Dämpfermasse (6) und Trägerstruktur (4) reibungsfreie elastische Schubelemente sind.

6. Impulsdämpfer nach einem der Ansprüche 1 - 5, **dadurch gekennzeichnet, dass** die Dämpfungselemente (7) oder das einzige Dämpfungselement (7) einerseits mit der Dämpfermasse (6) verbunden sind / ist und andererseits mit der Anschlagscheibe (3).

7. Impulsdämpfer nach einem der Ansprüche 1 - 6, **dadurch gekennzeichnet, dass** die Dämpfungselemente (7') oder das einzige Dämpfungselement (7') einerseits mit der Trägerstruktur (4) verbunden sind / ist und andrerseits mit der Anschlagscheibe (3').

8. Impulsdämpfer nach einem der Ansprüche 1 - 7, **dadurch gekennzeichnet, dass** die Dämpfungselemente (7)(7') Feder-Elemente, Elastomer-Elemente, Reibelemente oder hydraulische Elemente sind.

9. Impulsdämpfer nach einem der Ansprüche 1 - 8, **dadurch gekennzeichnet, dass** die erste Anschlagvorrichtung (3)(7) mindestens drei einzelne Dämpfungselemente (7) und die zweite Anschlagvorrichtung (3')(7') mindestens drei Dämpfungselemente (7') aufweist, die jeweils so am Umlauf der jeweiligen ringförmigen Anschlagscheibe (3)(3') verteilt sind, dass in alle möglichen Schwingungsrichtungen der Masse (6) die gleiche Steifigkeit und Dämpfung vorliegt, wobei die Dämpfungselemente im Wesentlichen gleiche Dämpfungseigenschaften aufweisen.

10. Impulsdämpfer nach Anspruch 9, **dadurch gekennzeichnet, dass** die Dämpfungselemente (7) jeweils gegenüber den Dämpfungselementen (7') angeordnet sind.

11. Impulsdämpfer nach Anspruch 9 oder 10, **dadurch gekennzeichnet, dass** die Dämpfungselemente (7)(7') verformbare, zylindrische oder konische Elastomerelemente sind.

12. Verwendung eines Impulsdämpfers gemäß einem der Ansprüche 1 - 11 zur Dämpfung von Schwingungen der 2. Eigenfrequenz der zu dämpfenden Anlage oder des hohen schlanken Bauwerks.

13. Turm oder schlankes, hohes Gebäude, umfassend einen Impulsdämpfer nach einem der Ansprüche 1-11.

14. Windkraftanlage umfassend einen Turm eine Gondel, und ein Rotorblattsystem mit Antrieb, **dadurch gekennzeichnet, dass** im Turm ein Impulsdämpfer gemäß einem der Ansprüche 1 - 11 angebracht ist, wobei der Impulsdämpfer auf 40 - 80 % der Höhe des Turms angebracht ist.

**Claims**

1. Impulse damper suitable for damping vibrations that occur in installations with towers or in other tall, narrow structures, the impulse damper being attached within the tower or the high, narrow structure and comprises:

   (a) a horizontally movable damper mass,
   (b) a horizontally aligned support structure for the damper mass, which support structure is firmly connected to the tower or the tall, narrow structure of the installation, so that the movements of the installation generated by the acting vibrational forces can be transferred to the damper mass that can be moved on the support structure, whereby, during the impacts of the moving damper mass against elements of the support structure or the installation, an impulse counter to the direction of movement of the installation is generated and the vibration that occurs is damped, and

(c) additional damping elements which become effective when the damper mass comes into contact with the support structure or installation,

(i) the damper mass (6) being horizontally freely movable on the horizontally aligned support structure (4) via bearing elements (5) on the underside of the damper mass and being annularly surrounded with a first rotationally symmetrical impact device (3)(7) which is fastened to its lateral circumference and is effective in the horizontal direction, and **characterized in that**

(ii) the support structure (4) is connected to a second, rotationally symmetrical impact device (3')(7') which is effective in the horizontal direction and which annularly encloses the first opposite impact device (3)(7) and the damper mass (6) at a distance defined in the idle state,

the first impact device (3)(7) comprising a first inflexible, horizontally aligned annular impact disk (3), which is distributed over its circumference, a plurality of first individual damping elements (7) firmly connected thereto, or a single first annular damping element (7) which is substantially continuous along the circumference of the impact disk (3),

and the second impact device (3')(7') comprising a second inflexible, horizontally aligned annular impact disk (3'), which is distributed over its circumference, a plurality of second individual damping elements (7') firmly connected thereto, or a single second annular damping element (7) which is substantially continuous along the circumference of the impact disk (3'),

and the two impact devices (3)(7) and (3')(7') being arranged in relation to one another in such a way that, with any horizontal movement or deflection of the damper mass (6) along the support structure (4), the impact disk (3) fastened thereto can strike, with its lateral outwardly pointing edge, against the opposite lateral edge of the impact disk (3') running further outwards in a circumferential manner with simultaneous deformation or activation of the plurality of or single damping elements (7) and (7').

2. Impulse damper according to claim 1, **characterized in that** the bearing elements (5) between the damper mass (6) and the support structure (4) are friction or sliding elements.

3. Impulse damper according to claim 2, **characterized**

**in that** the friction and sliding elements (5) have a coefficient of friction which is designed according to the properties and the operating conditions of the installation so that sufficient energy dissipation from the vibrating installation takes place through friction.

4. Impulse damper according to claim 3, **characterized in that** the coefficient of friction of the sliding elements (5) is selected so that the damper mass (6) only starts moving at larger vibration amplitudes, but stands still during normal operation.

5. Impulse damper according to claim 1, **characterized in that** the bearing elements (5) between the damper mass (6) and the support structure (4) are frictionless, resilient shear elements.

6. Impulse damper according to any of claims 1-5, **characterized in that** the damping elements (7) or the single damping element (7) are/is connected on one side to the damper mass (6) and on the other side to the impact disk (3).

7. Impulse damper according to any of claims 1-6, **characterized in that** the damping elements (7') or the single damping element (7') are/is connected on one side to the support structure (4) and on the other side to the impact disk (3').

8. Impulse damper according to any of claims 1-7, **characterized in that** the damping elements (7)(7') are spring elements, elastomer elements, friction elements, or hydraulic elements.

9. Impulse damper according to any of claims 1-8, **characterized in that** the first impact device (3)(7) has at least three individual damping elements (7) and the second impact device (3')(7') has at least three damping elements (7'), each distributed to the circumference of each annular impact disk (3)(3') such that the same stiffness and damping is present in all possible directions of vibration of the mass (6), the damping elements having substantially the same damping properties.

10. Impulse damper according to claim 9, **characterized in that** the damping elements (7) are each arranged opposite the damping elements (7').

11. Impulse damper according to either claim 9 or claim 10,
**characterized in that** the damping elements (7)(7') are deformable, cylindrical, or conical elastomer elements.

12. Use of an impulse damper according to any of claims 1-11 for damping vibrations of the second natural frequency of the installation to be damped or of the

**13.** Tower or narrow, tall building comprising an impulse damper according to any of claims 1-11.

**14.** Wind turbine comprising a tower, a nacelle, and a rotor blade system having a drive, **characterized in that** an impulse damper according to any of claims 1-11 is attached in the tower, the impulse damper being attached at 40-80% of the height of the tower.


**Revendications**

**1.** Amortisseur à impulsions adapté pour l'amortissement d'oscillations qui surviennent dans des installations comportant des tours ou dans d'autres constructions hautes et minces, dans lequel l'amortisseur à impulsions est monté à l'intérieur de la tour ou de la construction haute et mince et comprend :

(a) une masse d'amortisseur mobile horizontalement,
(b) une structure porteuse orientée horizontalement pour la masse d'amortisseur et reliée de manière fixe à la tour ou à la construction haute et mince de l'installation, de sorte que les mouvements de l'installation générés par l'action de forces d'oscillation peuvent être transmis à la masse d'amortisseur mobile sur la structure porteuse, moyennant quoi, lorsque la masse d'amortisseur mue vient en butée contre des éléments de la structure porteuse ou de l'installation, une impulsion est générée à l'encontre de la direction de mouvement de l'installation et l'oscillation qui survient est amortie, et
(c) des éléments d'amortissement supplémentaires qui sont actifs lorsque la masse d'amortisseur entre en contact avec la structure porteuse ou l'installation,
dans lequel

(i) la masse d'amortisseur (6) peut être mue librement horizontalement sur la structure porteuse (4) orientée horizontalement par l'intermédiaire d'éléments de palier (5) sur la face inférieure de la masse d'amortisseur et est entourée en forme d'anneau avec un premier dispositif de butée (3)(7) fixé au niveau de sa circonférence latérale, symétrique en rotation et actif dans la direction horizontale, et **caractérisé en ce que**
(ii) la structure porteuse (4) est reliée à un second dispositif de butée (3')(7') symétrique en rotation et actif dans la direction horizontale, lequel enferme le premier dispositif de butée (3)(7) opposé et la masse d'amortisseur (6) en forme d'anneau avec une distance définie dans l'état de repos,

dans lequel le premier dispositif de butée (3)(7) comprend une première rondelle de butée (3) non flexible, en forme d'anneau et orientée horizontalement, laquelle présente, répartis sur sa circonférence, plusieurs premiers éléments d'amortissement (7) individuels reliés de manière fixe à celle-ci ou un premier élément d'amortissement (7) individuel en forme d'anneau et sensiblement continu le long de la circonférence de la rondelle de butée (3),
et le second dispositif de butée (3')(7') comprend une seconde rondelle de butée (3') non flexible, en forme d'anneau et orientée horizontalement, laquelle présente, répartis sur sa circonférence, plusieurs seconds éléments d'amortissement (7') individuels reliés de manière fixe à celle-ci ou un second élément d'amortissement (7) individuel en forme d'anneau et sensiblement continu le long de la circonférence de la rondelle de butée (3'),
et les deux dispositifs de butée (3)(7) et (3')(7') sont disposés l'un par rapport à l'autre de sorte que, lors d'un mouvement ou d'une déviation horizontal quelconque de la masse d'amortisseur (6) le long de la structure porteuse (4), la rondelle de butée (3) qui est fixée sur ladite masse d'amortisseur peut venir en butée avec son bord latéral tourné vers l'extérieur sur le bord latéral opposé de la rondelle de butée (3') circonférentielle en déformant ou en activant simultanément les éléments d'amortissement (7) et (7') multiples ou individuels.

**2.** Amortisseur à impulsions selon la revendication 1, **caractérisé en ce que** les éléments de palier (5) entre la masse d'amortisseur (6) et la structure porteuse (4) sont des éléments de friction ou de glissement.

**3.** Amortisseur à impulsions selon la revendication 2, **caractérisé en ce que** les éléments de friction et de glissement (5) présentent un coefficient de friction qui est conçu en fonction des propriétés et des conditions de fonctionnement de l'installation de sorte qu'une dissipation d'énergie suffisante est effectuée par friction à partir de l'installation oscillante.

**4.** Amortisseur à impulsions selon la revendication 3, **caractérisé en ce que** le coefficient de friction des éléments de glissement (5) est choisi de sorte que la masse d'amortisseur (6) ne se met en mouvement qu'à des amplitudes d'oscillation élevées, mais reste immobile lors du fonctionnement normal.

**5.** Amortisseur à impulsions selon la revendication 1, **caractérisé en ce que** les éléments de palier (5) entre la masse d'amortisseur (6) et la structure porteuse (4) sont des éléments de poussée élastiques sans friction.

6. Amortisseur à impulsions selon l'une des revendications 1 à 5,
   **caractérisé en ce que** les éléments d'amortissement (7) ou l'élément d'amortissement (7) individuel sont reliés d'un côté à la masse d'amortisseur (6) et de l'autre côté à la rondelle de butée (3).

7. Amortisseur à impulsions selon l'une des revendications 1 à 6,
   **caractérisé en ce que** les éléments d'amortissement (7') ou l'élément d'amortissement (7') individuel sont reliés d'un côté à la structure porteuse (4) et de l'autre côté à la rondelle de butée (3').

8. Amortisseur à impulsions selon l'une des revendications 1 à 7,
   **caractérisé en ce que** les éléments d'amortissement (7)(7') sont des éléments à ressort, des éléments élastomères, des éléments de friction ou des éléments hydrauliques.

9. Amortisseur à impulsions selon l'une des revendications 1 à 8,
   **caractérisé en ce que** le premier dispositif de butée (3)(7) présente au moins trois éléments d'amortissement (7) individuels et le second dispositif de butée (3')(7') présente au moins trois éléments d'amortissement (7'), lesquels sont respectivement répartis sur la circonférence de la rondelle de butée (3)(3') en forme d'anneau respective, de sorte que, dans toutes les directions d'oscillation possibles, la masse (6) possède la même rigidité et le même amortissement, dans lequel les éléments d'amortissement présentent sensiblement des propriétés d'amortissement identiques.

10. Amortisseur à impulsions selon la revendication 9,
    **caractérisé en ce que** les éléments d'amortissement (7) sont disposés respectivement à l'opposé des éléments d'amortissement (7').

11. Amortisseur à impulsions selon la revendication 9 ou 10,
    **caractérisé en ce que** les éléments d'amortissement (7)(7') sont des éléments élastomères déformables, cylindriques ou coniques.

12. Utilisation d'un amortisseur à impulsions selon l'une des revendications 1 à 11 pour l'amortissement d'oscillation de 2$^{\text{de}}$ fréquence propre de l'installation ou de la construction haute et mince à amortir.

13. Tour ou bâtiment mince et haut, comprenant un amortisseur à impulsions selon l'une des revendications 1 à 11.

14. Installation éolienne comprenant une tour, une nacelle et un système de pales de rotor comportant un entraînement, **caractérisée en ce que** dans la tour est monté un amortisseur à impulsions selon l'une des revendications 1 à 11, dans laquelle l'amortisseur à impulsions est monté à 40 à 80 % de la hauteur de la tour.

**Fig. 1:**

3'  3       A-A       6

1

2

7'      7    4          5

**Fig. 2:**

7'          4
                        1
6
                        2
3'

A          A
                        7

10
                        3

11

**Fig. 3:**

1

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9657717 B2